Europäisches Patentamt

European Patent Office

Office européen des brevets

(11) Numéro de publication: **0 148 707**
**B1**

(12) **FASCICULE DE BREVET EUROPEEN**

(45) Date de publication du fascicule du brevet: **01.07.87**

(21) Numéro de dépôt: **84402750.8**

(22) Date de dépôt: **28.12.84**

(51) Int. Cl.⁴: **C 01 G 43/025**

(54) **Procédé et installation de production de dioxyde d'uranium frittable.**

(30) Priorité: **28.12.83 FR 8320942**

(43) Date de publication de la demande:
**17.07.85 Bulletin 85/29**

(45) Mention de la délivrance du brevet:
**01.07.87 Bulletin 87/27**

(84) Etats contractants désignés:
**BE GB SE**

(56) Documents cités:
**FR-A-1 311 679**
**FR-A-2 011 952**
**FR-A-2 143 100**
**GB-A- 921 655**
**US-A-3 160 471**

(73) Titulaire: **SOCIETE COGEMA, FRAMATOME et
URANIUM PECHINEY**
**2, rue Paul Dautier**
**F-78140 Velizy Villacoublay (FR)**

(72) Inventeur: **Fort, Claude**
**5, rue Joffre**
**F-30400 Villeneuve les Avignon (FR)**
Inventeur: **Hot, Gilbert**
**Chemin Parot**
**F-07700 St Marsel d'Ardèche (FR)**

(74) Mandataire: **Fort, Jacques et al**
**CABINET PLASSERAUD 84, rue d'Amsterdam**
**F-75009 Paris (FR)**

## Description

L'invention a pour objet un procédé et une installation de fabrication en continu de dioxyde d'uranium frittable, permettant d'alimenter directement une chaîne de granulation et de fabrication de pastilles de combustible nucléaire, à partir d'hexafluorure d'uranium.

On sait que l'uranium est généralement enrichi à l'état d'hexafluorure d'uranium $UF_6$. Il est ensuite nécessaire de repasser de ce composé au dioxyde d'uranium $UO_2$. On connaît déjà un procédé de production en continu d'$UO_2$ frittable à partir d'$UF_6$ gazeux en réalisant dans une seule et même enceinte, successivement, la transformation de l'$UF_6$ gazeux en oxyfluorure d'uranium $UO_2F_2$ par réaction avec de la vapeur d'eau sous atmosphère d'azote, puis la circulation à contre-courant avec de la vapeur d'eau chauffée pour fournir $U_3O_8$ qui est enfin réduit en dioxyde d'uranium $UO_2$ par l'hydrogène.

Ce procédé, dont on trouvera une description dans les documents FR—A—2 060 242 et FR—A—2 473 494, peut notamment être mis en oeuvre dans une enceinte étanche commune où sont injectés les différents réactifs et qui comporte un four tournant. Des installations de ce type sont décrites dans les documents FR—A—2 060 242 déjà mentionné et US—A—3 698 697. Il arrive fréquemment que, par suite d'une variation de propriétés des réactifs, d'incidents de fonctionnement, d'imperfections de la régulation, certains lots de produit final ne répondent pas aux spécifications requises pour le frittage ultérieur. Ces lots peuvent notamment comporter des éléments de base qui n'ont pas réagi, des produits intermédiaires résiduels, un excès d'humidité, une granulométrie non satisfaisante. A l'heure actuelle, ces produits rebutés doivent être retraités séparément.

L'invention vise notamment à écarter la nécessité d'un tel appareil supplémentaire. Pour cela, elle vise à permettre de recycler les lots de produit final ne répondant pas aux spécifications dans l'installation de conversion elle-même. Il est en effet apparu, ce qui n'était nullement évident a priori, qu'on peut, moyennant une régulation appropriée, admettre comme produit de départ dans l'installation, en plus des réactifs de fabrication d'$UO_2$ à partir d'$UF_6$, une fraction importante d'$UO_2$ recyclé, en réduisant les quantités de réactifs de conversion en fonction du débit de dioxyde d'uranium à recycler admis.

Un procédé suivant l'invention consiste donc à introduire également, dans l'enceinte étanche de conversion, un débit de dioxyde d'uranium à recycler et en même temps à réduire le débit d'$UF_6$ et de réactifs de conversion de façon à maintenir le débit de dioxyde d'uranium fourni à une valeur proche de la capacité nominale du four.

L'invention propose également une installation de production de dioxyde d'uranium frittable comportant une enceinte de conversion d'$UF_6$ en $UO_2$ par la vapeur d'eau, munie d'entrées de débits réglables d'$UF_6$, de vapeur d'eau et d'azote en amont d'un four de défluoration, caractérisée en ce qu'elle comporte, d'une part, un conduit d'amenée de dioxyde d'uranium à recycler en amont du four, conduit muni de moyens interdisant la remontée des gaz de réaction vers l'alimentation du conduit et de moyens de réglage de débit d'amenée et, d'autre part, des moyens de réglage corrélatif du débit d'amenée d'hexafluorure d'uranium et des réactifs de défluoration.

L'invention sera mieux comprise à la lecture de la description qui suit d'un mode particulier d'exécution, donné à titre d'exemple non limitatif. La description se réfère aux dessins qui l'accompagnent, dans lesquels:

— la Figure 1 est un schéma de principe montrant l'enceinte du réacteur d'une installation de conversion directe d'hexafluorure d'uranium en dioxyde d'uranium et un système d'alimentation en $UO_2$ recyclé,
— la Figure 2 montre schématiquement un système de traitement et de séparation raccordé à la sortie de l'enceinte de la Figure 1.

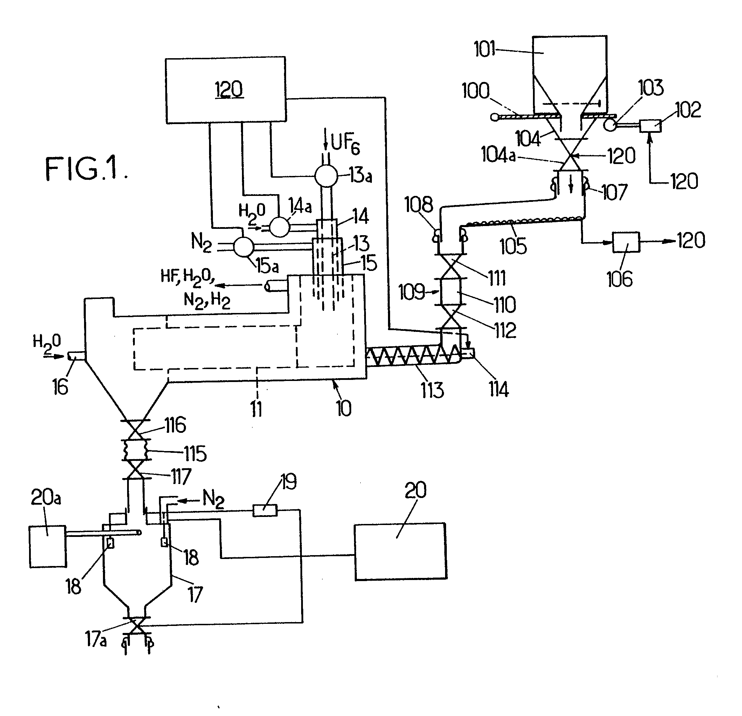

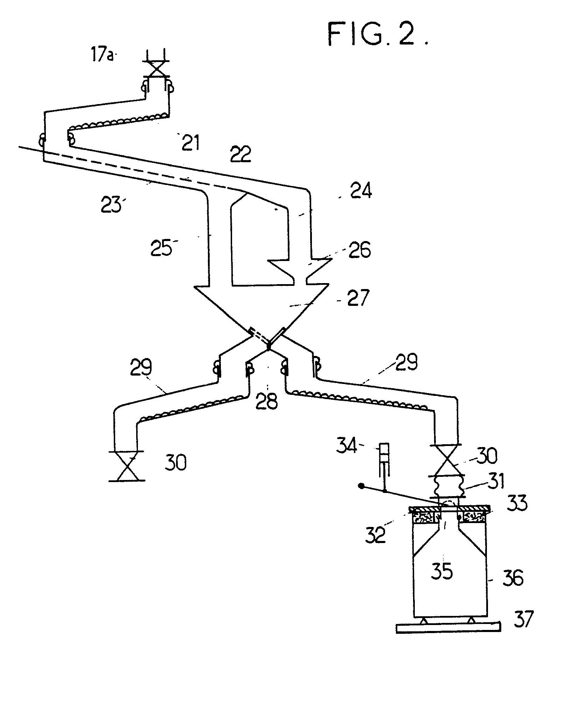

L'installation suivant l'invention montrée schématiquement en Figures 1 et 2, est destinée à fournir du dioxyde d'uranium utilisable dans une chaîne de granulation et de fabrication de pastilles de combustible nucléair, directement à partir d'hexafluorure d'uranium et d'une fraction de dioxyde d'uranium recyclé qui peut varier d'une proportion nulle à une proportion proche de 100%.

Cette installation comporte un réacteur ayant une enceinte étanche 10, dans lequel s'effectuent la conversion d'$UF_6$ en $UO_2$ et, éventuellement, la transformation d'$UO_2$ impur en $UO_2$ présentant les caractéristiques nécessaires. Cette enceinte ne sera pas décrite car elle peut notamment être d'un type connu, par exemple l'un de ceux décrits dans les documents FR—A— 2 060 242 et US—A— 3 698 697. Il suffit de noter ici que l'enceinte 10 est munie de moyens d'amenée d'$UF_6$ gazeux, de vapeur d'eau et d'azote en amont d'une zone de réaction où l'$UF_6$ se transforme en $UO_2F_2$, puis d'une zone de formation d'$U_3O_8$, puis d'$UO_2$, contenant un four tournant schématisé en 11. Pour obtenir une répartition homogène des réactifs, $UF_6$, $H_2O$ et $N_2$ peuvent être injectés dans l'enceinte 10 par un jeu de trois buses concentriques 13, 14 et 15 munies chacune d'une vanne de réglage 13a, 14a et 15a. Une arrivée de vapeur d'eau supplémentaire 16 est prévue en aval du four pour assurer une circulation à contre-courant.

Le système d'alimentation en dioxyde d'uranium à recycler comporte une table à chocs 100 destinée à recevoir in conteneur 101 rempli de dioxyde d'uranium à retraiter. La table est munie de moyens permettant de lui imprimer des secousses dans le sens vertical. Sur la Figure 1, ces moyens sont schématisés par un excentrique 103 entraîné en rotation par un moteur 102. Les secousses ainsi imprimées au conteneur 101 permettent de faire descendre la poudre par gravité, même en cas de colmatage. Le système comporte une trémie 104 équipée d'une vanne 104a qui permet de bloquer l'écoulement d'UO$_2$ ou d'autoriser cet écoulement vers un couloir vibrant 105. Un détecteur 106 associé à un capteur placé à l'entrée du couloir vibrant 105 fournit un signal indiquant si de la poudre est présente en tête du couloir. Ce détecteur 106 peut commander directement l'ouverture de la vanne 104a. Il peut également fournir un signal à un automate programmable 120 qui commande l'ensemble des vannes de l'installation et actionne également le moteur 102 si, alors que la vanne 104a est ouverte, le détecteur 106 indique l'absence de poudre dans le couloir 105. Un joint d'étanchéité souple 107 relie le couloir vibrant 105 à la vanne 104a. Un second joint souple 108 relie l'aval du couloir vibrant à un sas 109 d'isolement comportant un tronçon de tube 110 et deux vannes 111 et 112 qui encadrent le tronçon 110. Les vannes 111 et 112 sont munies d'un système de commande qui n'autorise qu'une ouverture alternative des deux vannes. Cette ouverture alternative peut être assurée par des moyens à minuterie ou directement par l'automate 120. Le rôle du sas 109 est d'interdire les remontées de gaz provenant de l'enceinte 110 vers le conteneur.

Le sas débouche dans un mécanisme d'alimentation à vis d'Archimède 113 entraînée par un moteur 114 à vitesse réglable, permettant de réguler l'alimentation de l'enceinte. Le mécanisme débouche dans l'enceinte en aval de la zone réactionnelle où se produit la transformation d'UF$_6$ en oxyfluorure d'uranium (également appelé fluorure d'uranyle), mais en amont du four tournant 11.

Le système de traitement et de séparation se raccorde à l'enceinte 10 du réacteur par une liaison souple 115 encadrée par deux vannes 16 et 117, formant un sas destiné à empêcher les gaz en légère surpression qui occupent l'enceinte 10 de pénétrer dans le système de traitement. La liaison souple 115 permet au surplus d'absorber les dilatations de l'enceinte 10 par rapport au système de traitement et de séparation, qui est fixe.

Le sas débouche, par une conduite verticale permettant l'écoulement par gravité, dans une trémie 17 formant réservoir tampon. Cette trémie s'ouvre par une vanne inférieure 17a dans un couloir vibrant 21 similaire au couloir 105.

La trémie 17 est muni de détecteurs permettant de vérifier la qualité du produit sortant de l'enceinte 10. La Figure 1 montre deux capteurs d'humidité 18 reliés à un circuit d'analyse 19 capable de commande la fermeture de la vanne 17a en cas d'anomalie. Un circuit de test 20 peut être prévu pour déclencher l'arrivée de bouffées d'azote humidifié dans la trémie 17 et permettre de contrôler la réponse des capteurs 18. Un mécanisme 20a de prise d'échantillons mécaniques peut également être prévu, au sein de la trémie 17, sur le trajet de descente du produit.

Le couloir vibrant 21, qui permet de répartir la poudre provenant de la trémie sous forme d'une couche homogène, alimente, par l'intermédiaire d'un joint d'étanchéité, un couloir 23 muni d'un tamis 22. Ce tamis sépare les fines qui sont dirigées vers une colonne 25 des grosses particules, qui parviennent dans une autre colonne 24. Un broyeur 26 placé à la partie basse de la colonne 24 ramène la granulométrie des "grosses" à la dimension requise. Un collecteur 27 dans lequel débouchent les colonnes 25 et 24 reçoit les fines et les produits broyés. La partie basse du collecteur 27 est munie d'un aiguillage à volet 28 permettant de guider la poudre vers l'un ou l'autre de deux couloirs vibrants 29 munis chacun d'une vanne de sortie 30 destinée à être raccordée à un conteneur de stockage 36, similaire au conteneur 101. La commande des vannes 30 et celle du volet d'aiguillage 28 sont synchronisées, par exemple à partir de l'automate programmble 120, de façon que la vanne de sectionnement 30 arrête l'arrivée de poudre lorsque le volet 28 pivote pour alimenter l'autre vanne 30. L'ordre de fermeture des vannes 30 et de basculement du volet 28 peut être déclenché par un signal provenant d'une bascule 37 sur laquelle est posé le conteneur 36.

Il est souhaitable d'assurer une connexion étanche entre chque vanne 30 et le conteneur associé 36, pour éviter une dispersion de poudre. Le mécanisme de liaison étanche montré en Figure 2 comporte un manchon souple 31 portant une bride de raccordement 32 munie d'un dispositif d'assistance à la fermeture comportant un levier et un vérin 34. La face inférieure de la bride 32 porte une couche épaisse de matériau élastique, par exemple de mousse de polymère à haute densité 33. La bride 32 et le conteneur 36 sont munis de deux goulottes 35 destinées à s'emboîter l'une dans l'autre et assurant une bonne étanchéité.

Le fonctionnement de l'installation qui vient d'être décrite est le même que celui d'une installation classique de conversion directe lorsqu'elle est alimentée uniquement en hexafluorure d'uranium. Lorsqu'au contraire elle doit fournir du dioxyde d'uranium à partir d'un pourcentage $m$ de dioxyde d'uranium impur (le pourcentage $m$ étant rapporté à la quantité d'uranium), l'automate programmable 120 doit être commandé de façon que:

— la vitesse de la vis 113 soit telle que le débit d'UO$_2$ qu'elle fournit corresponde à $m$ fois la capacité de fonctionnement nominale du four,
— les débits d'UF$_6$ et de vapeur d'eau correspondent à une fraction $(1-m)$ du débit nominal du four,
— les moyens de chauffage du four et, éventuellement, le débit d'azote correspondent à des conditions physico-chimiques provoquant successivement la transformation d'UF$_6$ en UO$_2$F$_2$, puis en U$_3$O$_8$, et enfin la réduction complète en dioxyde d'uranium ayant un taux d'impuretés acceptable.

## Revendications

1. Procédé de fabrication en continu de dioxyde d'uranium frittable, suivant lequel, dans une seule et même enceinte, successivement, on transforme UF₆ gazeux en oxyfluorure d'uranium $UO_2F_2$ par réaction avec de la vapeur d'eau sous atmosphère d'azote, puis on fait circuler $UO_2F_2$ à contre-courant avec de la vapeur d'eau chauffée pour fournir $U_3O_8$ qui est enfin réduit en dioxyde d'uranium $UO_2$ par l'hydrogène, caractérisé en ce qu'on introduit également, dans l'enceinte étanche (10) de conversion, un débit de dioxyde d'uranium à recycler et on réduit le débit d'UF₆ et de réactifs de conversion de façon à maintenir le débit de dioxyde d'uranium fourni à une valeur proche de la capacité nominale de production.

2. Installation de production de dioxyde d'uranium frittable comportant une enceinte de conversion d'UF₆ en $UO_2$ par la vapeur d'eau, munie d'entrées d'UF₆, de vapeur d'eau et d'azote en amont d'un four de défluoration, caractérisée en ce qu'elle comporte également, d'une part, un conduit d'amenée de dioxyde d'uranium à recycler en amont du four, conduit muni de moyens (109) interdisant la remontée des gaz de réaction vers l'alimentation du conduit, et de moyens (113) de réglage de débit d'amenée et, d'autre part, des moyens (13a, 14a, 15a) de réglage corrélatif du débit d'amenée d'hexafluorure d'uranium et des réactifs de défluoration.

3. Installation suivant la revendication 2, caractérisée en ce que le conduit d'amenée comporte des moyens (113) de réglage du débit de dioxyde d'uranium recyclé dans l'enceinte.

4. Installation selon la revendication 2 ou 3, caractérisée en ce que ledit conduit comporte un couloir vibrant (105), de réception de dioxyde d'uranium à recycler alimentant par gravité un sas (109) constituant lesdits moyens interdisant la remontée des gaz.

5. Installation selon la revendication 2, 3 ou 4, caractérisée en ce qu'elle comporte un automate (120) de commande de l'ensemble des moyens de réglage et des moyens de chauffage du four.

6. Installation selon l'une quelconque des revendications 2 à 5, caractérisée en ce que ladite enceinte (10) est munie d'un sas (116) de sortie (d'UO₂ relié à une trémie (17) munie de détecteurs de détermination de la qualité du dioxyde d'uranium.

7. Installation selon la revendication 6, caractérisée en ce que la trémie est munie de moyens mécaniques de prélèvement d'UO₂.

## Patentansprüche

1. Verfahren zur kontinuierlichen Herstellung von sinterfähigem Urandioxid, gemäß dem man in einem und demselben Behälter nacheinander gasförmiges UF₆ durch Reaktion mit Wasserdampf unter Stickstoffatmosphäre in Uranoxyfluorid $UO_2F_2$ umwandelt, dann $UO_2F_2$ im Gegenstrom mit erhitztem Wasserdampf zirkulieren läßt, um $U_3O_8$ zu erhalten, das schließlich durch Wasserdampf zu Urandioxid $UO_2$ reduziert wird, dadurch gekennzeichnet, daß man in den dichten Umwandlungsbehälter (10) auch einen rückzuführenden Urandioxiddurchsatz einleitet und den Durchsatz an UF₆ und an Umwandlungsreagentien derart verringert, daß der Durchsatz an erhaltenem Urandioxid auf einem der Nennproduktionskapazität nahen Wert gehalten wird.

2. Vorrichtung zur Herstellung von sinterfähigem Urandioxid mit einem Behälter zur Umwandlung von UF₆ durch Wasserdampf in $UO_2$, der mit UF₆-, Wasserdampf- und Stickstoffeinlässen stromauf eines Entfluorierungsofens angebracht ist, dadurch gekennzeichnet, daß sie außerdem einerseits eine Zuführleitung für rückzuführendes Urandioxid stromauf des Ofens, die mit dem Rückstrom der Raaktionsgase zur Speisung der Leitung verhinderenden Mitteln (109) versehen ist, und andererseits Mittel (13a, 14a, 15a) zur korrelativen Regulierung des Zuleitungsdurchsatzes an Uranhexafluorid und Entfluorierungsreagentien aufweist.

3. Vorrichtung nach dem Anspruch 2, dadurch gekennzeichnet, daß die Zuführleitung Mittel (113) zur Regulierung des Durchsatzes an in den Behälter rückgeführtem Urandioxid aufweist.

4. Vorrichtung nach dem Anspruch 2 oder 3, dadurch gekennzeichnet, daß die Leitung eine Schüttelrutsche (105) zur Aufnahme von rückzuführendem Urandioxid aufweist, die durch Schwerkraft eine Schleuse (109) speist, die die den Rückstrom der Gase verhindernden Mittel darstellt.

5. Vorrichtung nach dem Anspruch 2, 3 oder 4, dadurch gekennzeichnet, daß sie einen Automat (120) zur Steuerung der Gesamtheit der Regulierungsmittel und der Mittel zum Heizen des Ofens aufweist.

6. Vorrichtung nach irgendeinem der Ansprüche 2 bis 5, dadurch gekennzeichnet, daß der Behälter (10) mit einer UF₂-Auslaßschleuse (116) versehen ist, die mit einem Trichter (17) verbunden ist, der mit Detektoren zur Bestimmung der Güte des Urandioxids versehen ist.

7. Vorrichtung nach dem Anspruch 6, dadurch gekennzeichnet, daß der Trichter mit mechanischen Mitteln zur Entnahme von $UO_2$ ausgerüstet ist.

## Claims

1. Process for continuous manufacture of sinterable uranium dioxide which comprises, in a single vessel and in succession, transforming gaseous UF₆ into uranium oxifluoride $UO_2F_2$ by reacting UF₆ with steam in a nitrogen atmosphere, then circulating $UO_2F_2$ in countercurrent to heated steam for generating $U_3O_8$ which is finally reduced into uranium dioxide $UO_2$ with hydrogen, characterized in that a flow of uranium dioxide to be recycled is also introduced into the airtight conversion vessel (10) and the flow of UF₆ and conversion reactants is decreased for maintaining the flow rate of uranium dioxide which is delivered at a value which is close to the rated production capacity.

2. Apparatus for producing sinterable uranium dioxide, comprising a vessel for conversion of $UF_6$ into $UO_2$ using steam, having inlets for $UF_6$, steam and nitrogen upstream of a defluorinating oven, characterized in that it further comprises, first, an inlet conduit for delivery of uranium dioxide to be recycled upstream of said oven, said conduit being provided with means (109) for preventing flowback of reaction gases toward the intake of the conduit and with means (113) for adjusting the flow of delivered flow and, second, means (13a, 14a, 15a) for correlatively adjusting the delivery flow rates of $UF_6$ and fluorine removal reactants.

3. Apparatus according to claim 2, characterized in that the delivery conduit has means (113) for metering the flow rate of recycled uranium dioxide into the vessel.

4. Apparatus according to claim 2 or 3, characterized in that said conduit comprises a vibrating pipe (105) for receiving a uranium dioxide to be recycled and for gravity feeding a lock (109) constituting said means preventing gas flowback.

5. Apparatus according to claim 2, 3 or 4, characterized in that it comprises a programmable controller (120) for control of all adjusting means and oven heating means.

6. Apparatus according to any of claims 2 to 5, characterized in that said vessel (10) is provided with a $UO_2$ outlet lock (116) connected to a hopper (17) provided with detectors for determination of the quality of the uranium dioxide.

7. Apparatus according to claim 6, characterized in that the hopper is provided with mechanical means for sampling of $UO_2$.

FIG.1.

0 148 707

# FIG. 2.